**Europäisches Patentamt**

**European Patent Office**

**Office européen des brevets**

(19)

(11) Veröffentlichungsnummer : **0 036 203**
**B1**

(12) **EUROPÄISCHE PATENTSCHRIFT**

(45) Veröffentlichungstag der Patentschrift :
**15.08.84**

(51) Int. Cl.³ : **A 01 B 63/112**

(21) Anmeldenummer : **81101911.6**

(22) Anmeldetag : **14.03.81**

(54) **Zugwiderstandsregelung für Traktoren.**

(30) Priorität : **17.03.80 US 130785**

(43) Veröffentlichungstag der Anmeldung :
**23.09.81 Patentblatt 81/38**

(45) Bekanntmachung des Hinweises auf die Patenterteilung : **15.08.84 Patentblatt 84/33**

(84) Benannte Vertragsstaaten :
**DE FR GB**

(56) Entgegenhaltungen :
**AT-B- 192 166**
**AT-B- 229 615**
**AT-B- 321 622**
**DE-A- 2 623 097**
**GB-A- 2 026 836**
**US-A- 3 768 568**

(73) Patentinhaber : **DEERE & COMPANY**
**1 John Deere Road**
**Moline Illinois 61265 (US)**

(72) Erfinder : **Lange, Henry James**
**R.R.2**
**Juneau Wisconsin 53039 (US)**

(74) Vertreter : **Gramm, Werner, Dipl.-Ing.**
**Patentanwälte Gramm + Lins Theo-**
**dor-Heuss-Strasse 2**
**D-3300 Braunschweig (DE)**

## Beschreibung

Die Erfindung betrifft eine Zugwiderstandsregelung für Traktoren mit Dreipunktaufhängung zur Ankupplung von Bodenbearbeitungsgeräten, mit zwei am hinteren Ende des Traktors angelenkten Unterlenkern, mit einer am hinteren Ende des Traktors drehbar gelagerten, angenähert horizontal und quer zum Traktor liegenden Hubwelle, mit der zwei Hubarme drehfest verbunden sind, mit die Verschwenkbewegung der Hubarme auf die Unterlenker übertragenden Verbindungslenkern, mit einem Antrieb zum Anheben und Absenken der Hubarme, mit einem Oberlenker und mit einer Zugwiderstandsmeßeinrichtung, die den jeweiligen, vom Oberlenker aufgenommenen Zugwiderstand in eine Winkelverdrehung der Hubwelle übersetzt, wenn dieser Zugwiderstand eine vorgegebene Größe übersteigt.

Eine derartige Ausführungsform läßt sich der US-PS 3 768 568 entnehmen. Hier wirken der Oberlenker sowie die beiden Unterlenker auf unter Wirkung der Zugwiderstände verschwenkbare Gestänge, die ihrerseits einen Schieber beaufschlagen, dessen Verschiebung als signale für eine hydraulisch arbeitende Zugwiderstandsmeßeinrichtung dienen. Deren Hydrauliksteuerung bewirkt in Abhängigkeit von dem jeweiligen, von dem an den Traktor angehängten Bodenbearbeitungsgerät ausgeübten Zugwiderstand ein Anheben oder Absenken der Dreipunktaufhängung durch Verdrehung der genannten Hubwelle.

Eine derartige, mit einer hydraulischen Servosteuerung arbeitende Zugwiderstandsregelung findet insbesondere bei großen landwirtschaftlichen Traktoren Verwendung. Nachdem aber die demgegenüber erheblich kleineren Rasen- und Gartentraktoren auch bereits in größeren Einheiten gebaut werden, ist es üblich geworden, auch diese Rasen- und Gartentraktoren mit einer Dreipunktaufhängung zur Ankupplung von Bodenbearbeitungsgeräten zu versehen. Dadurch erhält der Traktorfahrer bessere Einflußmöglichkeiten auf das Bodenbearbeitungsgerät sowie die Möglichkeit, größere Bearbeitungsgeräte zu verwenden. Jedoch ist die Verwendung von Servo-Steuereinrichtungen in Rasen- und Gartentraktoren aus ökonomischen Gründen unvorteilhaft.

Der Erfindung liegt somit die Aufgabe zugrunde, die eingangs erläuterte Zugwiderstandsregelung an die Bedürfnisse eines Traktors kleinerer Baugröße, beispielsweise eines Rasen- und Gartentraktors, anzupassen.

Diese Aufgabe wird gemäß der Erfindung durch folgende Merkmale gelöst:

a) der Antrieb zum Anheben und Absenken der Hubarme besteht aus einem mechanischen Schwenktrieb, der an einem auf der Hubwelle drehenden Hublager angreift, auf dessen Auflagefläche der Hubarm aufliegt;

b) eine Achse ist parallel zur Hubwelle und vor dieser liegend drehfest am Traktor festgelegt;

c) auf der Achse sind drehfest mehrere Lenkerplatten befestigt, die in senkrecht zur Achse stehenden Ebenen liegen und miteinander fluchtende Schlitze aufweisen;

d) zwei erste Lenker liegen zwischen den Lenkerplatten, sind um eine gemeinsame Achse verschwenkbar und mit einem Stift versehen, der sich durch die Schlitze der Lenkerplatten erstreckt;

e) der Oberlenker ist an und zwischen den beiden ersten Lenkern so verschwenkbar gelagert, daß seine Längsverstellung ein Verschwenken der ersten Lenker und damit eine Verschiebung des Stiftes in den Schlitzen bewirkt;

f) ein zweiter Lenker ist verschwenkbar gelagert und weist eine mechanische Drehverbindung mit der Hubwelle auf; und

g) der zweite Lenker weist eine dem genannten Stift derart zugeordnete Anschlagfläche auf, daß die Verschiebung des Stiftes in den Schlitzen zu einer Verschwenkung des zweiten Lenkers zusammen mit der Hubwelle führt.

Bei der neuen Zugwiderstandsregelung wird somit auf elektrische, hydraulische oder pneumatische Servoeinrichtungen verzichtet. Wird eine für den Zugwiderstand vorgegebene Größe über- oder unterschritten, so erfolgt durch ausschließlich mechanische Verstellung von Übertragungsgliedern ein Anheben bzw. Absenken der Dreipunktaufhängung. Derartige Konstruktionen sind daher insbesondere für Traktoren kleinerer Bauart geeignet.

Die mechanische Drehverbindung zwischen dem zweiten Lenker und der Hubwelle kann so ausgebildet sein, daß der zweite Lenker frei drehbar auf der Hubwelle sitzt und zwischen zwei drehfest auf der Hubwelle sitzenden Laschen liegt, die einen parallel zur Hubwelle liegenden Anschlagzapfen tragen, an dem eine in den zweiten Lenker eingeschraubte Schraube anliegt.

In der Zeichnung ist eine als Beispiel dienende Ausführungsform der Erfindung dargestellt. Es zeigen:

Figur 1 in Seitenansicht einen Rasen- und Gartentraktor und einen an dessen Dreipunktaufhängung angekuppelten Pflug;

Figur 2 in vergrößertem Maßstab einen Ausschnitt des hinteren Traktorendes;

Figur 3 einen Teil der Darstellung gemäß Figur 2 in Draufsicht;

Figur 4 einen Schnitt gemäß der Linie 4-4 in Figur 3 und

Figur 5 eine Explosionsdarstellung einer Steuereinrichtung.

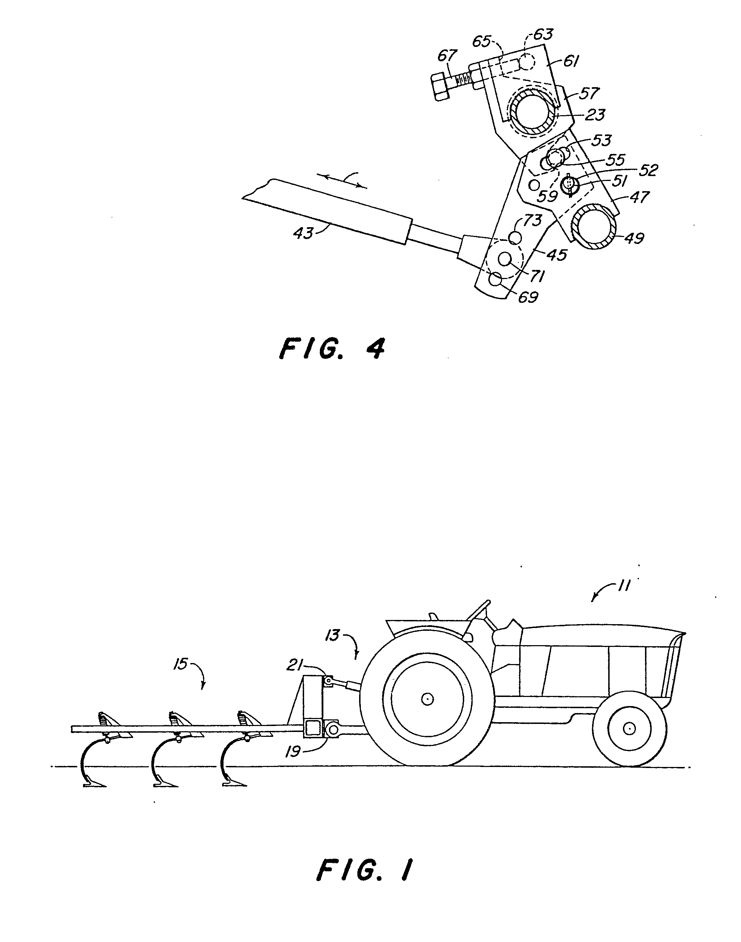

Gemäß Figur 1 ist ein Traktor 11 mit einer Aufhängung 13 versehen, an die ein Bodenbearbeitungsgerät 15 angekoppelt ist und zwar über Geräteanlenkarme 19,21. Wenn der Traktor 11 das Bodenbearbeitungsgerät 15 zieht, übt letzteres auf den Traktor eine Zugwiderstandskraft aus.

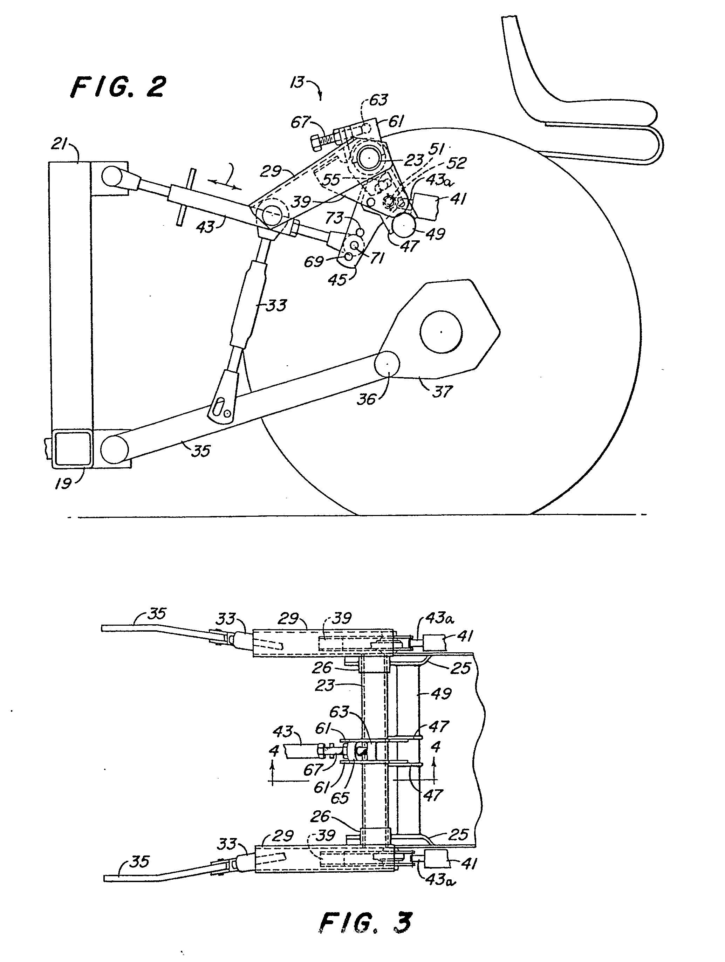

Gemäß den Figuren 2 und 3 sind am hinteren Traktorende an dessen Fahrzeugrahmen beidseitig Tragbleche 25 befestigt, an denen jeweils ein Wellentragring 26 festgelegt ist, zwischen denen eine Hubwelle 23 drehbar gelagert ist. Neben den Wellentragringen 26 sind an der Hubwelle 23 zwei Hubarme 29 drehfest befestigt, die jeweils in senkrecht zur Hubwelle 23 stehenden Ebenen liegen. An dem hinten liegenden Ende jedes Hubarmes 29 ist das obere Ende eines justierbaren Verbindungslenkers 33 angelenkt, dessen unteres Ende an einem Unterlenker 35 angelenkt ist und zwar an einem Punkt, der hinter dem Mittelpunkt dieses Unterlenkers 35 liegt.

Das vordere Ende jedes Unterlenkers 35 ist an dem hinteren Lagergehäuse 37 des Traktors bei 36 angelenkt. Die Anordnung der Verbindungslenker 33 ist so, daß eine Verschwenkung der Hubarme 29 zu einer Verschwenkung der Unterlenker 35 um ihren Anlenkpunkt 36 führt.

Jeder Hubarm 29 liegt mit seiner Unterseite auf einem Hublager 39 auf, das frei drehbar auf der Hubwelle 23 gelagert ist und von einem Hydraulikzylinder 41 derart beaufschlagt wird, daß ein Ausfahren oder Einziehen des Zylinderkolbens 43a zu einer Verdrehung des Hublagers 39 auf der Hubwelle 23 und damit zu einem Verschwenken des entsprechenden Hubarms 29 führt.

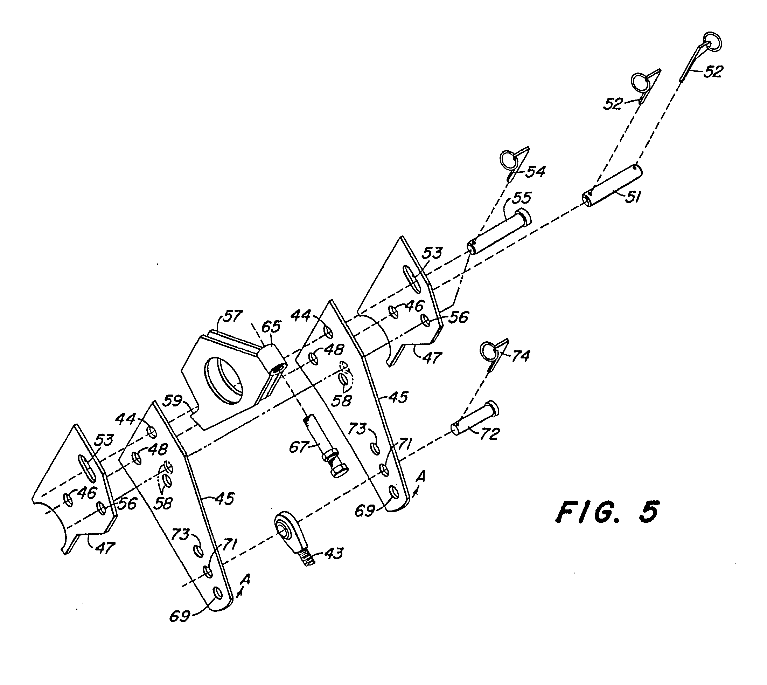

Gemäß den Figuren 4 und 5 ist das vordere Ende eines Oberlenkers 43 zwischen zwei ersten Lenkers 45 angelenkt, die ihrerseits zwischen zwei Lenkerplatten 47 liegen, die drehfest auf einer Achse 49 sitzen. Letztere liegt parallel zu der Hubwelle 23, ist — in Fahrtrichtung des Traktors gesehen — vor dieser angeordnet und drehfest an den Tragblechen 25 festgelegt. Um ein Verschwenken der ersten Lenker 45 zwischen der Lenkerplatten 47 zu ermöglichen, ist ein Schwenkzapfen 51 durch Bohrungen 46 der Lenkerplatten 47 und Bohrungen 48 der ersten Lenker 45 gesteckt. Die Lage des Schwenkzapfens 51 kann durch übliche Elemente gesichert werden wie z. B. durch Sicherungsstifte 52, die außerhalb der Lenkerplatten 47 durch die Enden des Schwenkzapfens 51 gesteckt sind. Die Lenkerplatten 47 weisen miteinander fluchtende Schlitze 53 auf, in denen ein Kopfbolzen 55 gleiten kann, der durch Bohrungen 44 der ersten Lenker 45 gesteckt ist und sich im wesentlichen senkrecht zu den ersten Lenkern 45 bzw. den Lenkerplatten 47 erstreckt. Eine Längsverschiebung des Kopfbolzens 45 wird einerseits durch dessen Kopf und an seinem anderen Ende durch einen Sicherheitsstift 54 verhindert, der durch das freie Ende des Kopfbolzens 55 gesteckt ist.

Auf der Hubwelle 23 ist ein zweiter Lenker 57 frei drehbar angeordnet, der mit einer Anschlagfläche 59 an dem Kopfbolzen 55 anliegt. Der zweite Lenker 57 ist auf der Hubwelle 23 zwischen einem Paar parallel zueinander liegenden Laschen 61 angeordnet, die drehfest mit der Hubwelle 23 verbunden sind, wobei die genannte Anschlagfläche 59 zwischen den beiden ersten Lenkern 45 liegt. Die beiden Laschen 61 tragen einen parallel zur Hubwelle 23 liegenden Anschlagzapfen 63. Der zweite Lenker 57 ist mit einem zylindrischen Ansatz 65 versehen, der dem Anschlagzapfen 63 gegenüberliegt, und in den eine Schraube 67 eingeschraubt ist, die mit ihrem freien Ende gegen den Anschlagzapfen 63 anliegt.

Die Wirkungsweise der Zugwiderstandsregelung ist wie folgt:

Zieht der Traktor 11 das Bodenbearbeitungsgerät 15, so übt letzteres aufgrund seines Eingriffs in den Boden eine Zugwiderstandskraft aus, die — wie in den Figuren 2 und 4 angegeben — von dem Geräteanlenkarm 21 auf den Oberlenker 43 übertragen wird. Von dort erfolgt die Übertragung der Zugwiderstandskraft auf die ersten Lenker 45, was zu deren Verschwenkung um die Schwenkzapfen 51 führt. Als Ergebnis dieser Verschwenkung gleitet der Kopfbolzen 55 in den Schlitzen 53 der Lenkerplatten 47. Dabei verschwenkt der Bolzen 55 durch Mitnahme der Anschlagfläche 59 den zweiten Lenker 57, der seinerseits durch seine Gewindeschraube 67 den Anschlagzapfen 63 verschiebt, wodurch eine Verdrehung der Hubwelle 23 erfolgt. Diese Verdrehung der Hubwelle 23 wiederum führt zu einem Anheben der Hubarme 29 über die Hublager 39; dadurch werden die Unterlenker 35 und dadurch schließlich das Bodenbearbeitungsgerät 15 angehoben.

Bei einem Nachlassen der Zugwiderstandskraft gleitet der Kopfbolzen 55 in den Schlitzen 53 zurück, so daß sich die Hubarme 29 in ihre Ausgangsstellung wieder absenken und dadurch auch das Bodenbearbeitungsgerät 15 in seine ursprüngliche Eingriffstiefe absenken.

Insbesondere Figur 5 zeigt eine Einrichtung zum Blockieren der Zugwiderstandsmeßeinrichtung. Hierfür werden die ersten Lenker 45 gemäß dem Pfeil A so weit angehoben, daß ihre Bohrungen 58 mit bohrungen 56 in den Lenkerplatten 47 fluchten. Der Kopfbolzen 55 wird nunmehr durch die genannten Bohrungen 56, 58 gesteckt, so daß die Meßeinrichtung blockiert ist.

Die ersten Lenker 45 weisen drei verschiedene Bohrungen 69, 71 und 73 auf, an denen wahlweise der Oberlenker 43 angelenkt werden kann. Die Größe der erforderlichen Überlast, die ein Anheben des bodenbearbeitungsgerätes 15 bewirken soll, wird durch die Wahl einer der Bohrungen 69, 71 oder 73 als Anlenkpunkt für den Oberlenker 43 festgelegt. Die größte Widerstandskraft ist erforderlich, wenn die Anlenkung bei 73 erfolgt, während die geringste Widerstandskraft bei einer Anlenkung bei 69 ausreicht. Die normale Zugwiderstandskraft wird festgelegt durch die Ausgangsstellung der Hubarme 29.

## Ansprüche

1. Zugwiderstandsregelung für Traktoren mit Dreipunktaufhängung (13) zur Ankupplung von Bodenbearbeitungsgeräten (15), mit zwei am hinteren Ende des Traktors (11) angelenkten Unterlenkern (35), mit einer am hinteren Ende des Traktors (11) drehbar gelagerten, angenähert horizontal und quer zum Traktor liegenden Hubwelle (23), mit der zwei Hubarme (29) drehfest verbunden sind, mit die Verschwenkbewegung der Hubarme (29) auf die Unterlenker (35) übertragenden Verbindungslenkern (33), mit einem Antrieb (39, 41, 43a) zum Anheben und Absenken der Hubarme (29), mit einem Oberlenker (43) und mit einer Zugwiderstandsmeßeinrichtung (45, 51 bis 59), die den jeweiligen, vom Oberlenker (43) aufgenommenen Zugwiderstand in eine Winkelverdrehung der Hubwelle (23) übersetzt, wenn dieser Zugwiderstand eine vorgegebene Größe übersteigt, gekennzeichnet durch folgende Merkmale :

a) der Antrieb zum Anheben und Absenken der Hubarme (29) besteht aus einem mechanischen Schwenktrieb (41, 43a), der an einem auf der Hubwelle (23) drehenden Hublager (39) angreift, auf dessen Auflagefläche der Hubarm (29) aufliegt ;

b) eine Achse (49) ist parallel zur Hubwelle (23) und vor dieser liegend drehfest am Traktor (11) festgelegt ;

c) auf der Achse (49) sind drehfest mehrere Lenkerplatten (47) befestigt, die in senkrecht zur Achse (49) stehenden Ebenen liegen und miteinander fluchtende Schlitze (53) aufweisen ;

d) zwei erste Lenker (45) liegen zwischen den Lenkerplatten (47), sind um eine gemeinsame Achse (Schwenkzapfen 51) verschwenkbar und mit einem Stift (55) versehen, der sich durch die Schlitze (53) der Lenkerplatten (47) erstreckt ;

e) der Oberlenker (43) ist an und zwischen den beiden ersten Lenkern (45) so verschwenkbar gelagert, daß seine Längsverstellung ein Verschwenken der ersten Lenker (45) und damit eine Verschiebung des Stiftes (55) in den Schlitzen (53) bewirkt ;

f) ein zweiter Lenker (57) ist verschwenkbar gelagert und weist eine mechanische Drehverbindung (61-67) mit der Hubwelle (23) auf ; und

g) der zweite Lenker (57) weist eine dem genannten Stift (55) derart zugeordnete Anschlagfläche (59) auf, daß die Verschiebung des Stiftes (55) in den Schlitzen (53) zu einer Verschwenkung des zweiten Lenkers (57) zusammen mit der Hubwelle (23) führt.

2. Zugwiderstandsregelung nach Anspruch 1, dadurch gekennzeichnet, daß der zweite Lenker (57) frei drehbar auf der Hubwelle (23) sitzt und zwischen zwei drehfest auf der Hubwelle (23) sitzenden Laschen (61) liegt, die einen parallel zur Hubwelle (23) liegenden Anschlagzapfen (63) tragen, an dem eine in den zweiten Lenker (57) eingeschraubte Schraube (67) anliegt.

## Claims

1. A draft control mechanism for tractors having three-point hitching means (13) for the attachment of ground-engaging implements (15) comprising two lower hitch arms (35) pivotally mounted rearwardly on said tractor (11), a lift shaft (23) which is rotatably mounted rearwardly on said tractor and which extends about horizontally and transverse to said tractor and which carries two lift arms (29) fixably mounted to said lift shaft (23), connecting links (33) for communicating motion of said lift arms (29) to said lower hitch arms (35), an actuator (39, 41, 43a) for raising or lowering said lift arms (29), an upper hitch arm (43), and draft load sensing means (45, 51-59) for receiving draft loads from said upper hitch arm (43) and translating said draft load to an angular displacement of said lift shaft (23) when said draft load exceeds a predetermined amount, characterized by the following features :

a) the actuator for raising or lowering said lift arms (29) comprises a mechanical tilting drive (41, 43a) acting on a lift pillow (39) placed around said lift shaft (23) and rotatable thereon and having an abuting surface to abut said lift arm (29) ;

b) a shaft (49) is fixably mounted to the tractor (11) parallel to and forwardly displaced from said lift shaft (23) ;

c) a plurality of linking plates (47) fixably mounted on said shaft (49) and extending perpendicular therto have aligned slots (53) therein ;

d) two first link members (45) are located between said linking plates (47) and pivotally supported on a general axis (pivot pin 51) and include a pin (55) extending through the slots (53) of said linking plates (47) ;

e) said upper hitch arm (43) is pivotally mounted to and between said first linking members (45) such that linear displacement of said upper link arm (43) causes said first linking members (45) to pivot resulting in movement of said pin (55) in said slots (53) ;

f) a second linking member (57) is pivotally supported and comprises a mechanical rotation connection (61-67) with said lift shaft (23) ; and

g) said second linking member (57) having an abuting surface (59) to said pin (55) such that said movement of said pin (55) in said slots (53) will cause said second linking member (57) to rotate together with said lift shaft (23).

2. A draft control mechanism according to claim 1 wherein two plate members (61) are fixably mounted to said lift shaft (23) such that said second linking member (57) is therebetween rotatably mounted on said lift shaft (23), whereby said plate members (61) carry a stop pin (63) extending parallel to said lift shaft (23), a screw (67) is in threaded engagement with said second linking member (57) such that said screw abuts said stop pin (63).

## Revendications

1. Dispositif de régulation de la résistance à la traction pour tracteurs équipés d'un système d'attelage trois points (13) en vue de l'accouplement d'appareils ou outils (15) pour le travail du sol, comprenant deux barres inférieures (35) articulées à l'extrémité arrière du tracteur (11), un arbre de relevage (23) monté à rotation à l'extrémité arrière du tracteur (11), sensiblement horizontal et orienté transversalement au tracteur, deux bras de levage (29) étant calés angulairement sur cet arbre, des bielles de liaison (33) transmettant le mouvement de pivotement des bras de levage (29) aux barres inférieures (35), un mécanisme d'entraînement (39, 41, 43) pour le relevage et l'abaissement des bras de relevage (29), une barre supérieure (43), et un dispositif (45, 51 à 59) de mesure de la résistance à la traction, convertissant la résistance à la traction momentanée supportée par la barre supérieure (43) en un déplacement angulaire de l'arbre de relevage (23) quand cette résistance à la traction dépasse une valeur prédéterminée, caractérisé par les particularités suivantes

a) le mécanisme servant à relever et abaisser les bras de levage (29) est constitué par un dispositif de pivotement mécanique (41, 43a) qui attaque un palier de levage (39) tournant sur l'arbre de relevage (23) et sur la surface d'appui duquel le bras de levage (29) vient reposer ;

b) un axe (49) est monté à poste fixe sur le tracteur (11) parallèlement à l'arbre de relevage (23), en avant de celui-ci, et est calé en rotation ;

c) plusieurs plaques (47) sont fixées et calées en rotation sur l'axe (49), ces plaques se trouvant dans des plans perpendiculaires à l'axe (49) et présentant des fentes (53) coïncidant entre elles ;

d) deux premiers leviers (45) sont disposés entre les plaques (47), et ils sont montés de façon à pouvoir pivoter autour d'un axe commun (tourillon de pivotement 51), et munis d'un goujon (55) qui s'étend à travers les fentes (53) des plaques (47) ;

e) la barre supérieure (43) est montée à pivotement sur les deux premiers leviers (45) et entre ceux-ci, de façon telle que son déplacement longitudinal provoque un pivotement des premiers leviers (45) et ainsi un déplacement en translation du goujon (55) dans les fentes (53) ;

f) un second levier (57) est monté de façon pivotante et comporte une liaison mécanique angulaire (61-67) avec l'arbre de relevage (23) ; et

g) le second levier (57) présente une surface d'appui (59) conjuguée au goujon (55), de telle sorte que le déplacement en translation du goujon (55) dans les fentes (53) aboutisse à un pivotement du second levier (57) conjointement à l'arbre de relevage (23).

2. Dispositif de régulation de la résistance à la traction suivant la revendication 1, caractérisé en ce que le second levier (57) est monté de façon à pouvoir tourner librement sur l'arbre de relevage (23) et se trouve entre deux pattes (61) calées angulairement sur cet arbre de relevage (23), ces pattes portant un goujon ou axe de butée (63) disposé parallèlement à l'arbre de relevage (23) et sur lequel une vis (67) vissée dans le second levier (57) vient s'appliquer.

FIG. 4

FIG. 1

1

FIG. 2

FIG. 3

FIG. 5